Europäisches Patentamt

European Patent Office

Office européen des brevets

(11) Publication number: **0 495 118 A1**

## EUROPEAN PATENT APPLICATION
### published in accordance with Art. 158(3) EPC

(21) Application number: 91913126.8

(22) Date of filing: **30.07.91**

(86) International application number:
**PCT/JP91/01016**

(87) International publication number:
**WO 92/02768 (20.02.92 92/05)**

(51) Int. Cl.⁵: **F24F 11/02**

(30) Priority: **30.07.90 JP 199028/90**

(43) Date of publication of application:
**22.07.92 Bulletin 92/30**

(84) Designated Contracting States:
**DE DK FR GB**

(71) Applicant: **YAMATAKE-HONEYWELL CO. LTD.**
**12-19 Shibuya 2 Chome Shibuya-Ku**
**Tokyo 150(JP)**

(72) Inventor: **KON, Akihiko**
**28-16, Momohamacho**
**Hiratsuka-shi, Kanagawa 254(JP)**

(74) Representative: **Kahler, Kurt, Dipl.-Ing. et al**
**Patentanwälte Kahler, Käck & Fiener,**
**Gerberstrasse 3, Postfach 12 49**
**W-8948 Mindelheim(DE)**

(54) **METHOD AND DEVICE FOR COMPUTING ESTIMATED MEAN TEMPERATURE SENSATION.**

(57) A device for computing estimated mean temperature sensation PMV indicating the degree of comfort in the room environment, which intends to simplify the process of computation, reduce the length of time for computation, and promote lowering of the selling price. On the basis of a radiant temperature $T_r$, atmospheric temperature $T_a$, air current speed $V_{air}$, fixed constant $T_{cr}$, coefficients $b_1 \sim b_3$, and coefficient n, an equivalent temperature $T_{eq}$ is computed by the following equation (a), and an estimated temperature sensation $PMV^X$ is computed on the basis of the equivalent temperature $T_{eq}$, atmospheric temperature $T_a$, relative humidity RH, saturated vapor pressure $Pa^X$, resistance of the clothes to heat $I_{cl}$, and coefficients $a_1 \sim a_6$, by another equation (c).

$$T_{eq} = b_1.T_r + b_2.T_2 - b_3.V_{air}^n.(T_{cr} - T_a) \qquad (a);$$

$$PMV^X = a_1 + a_2.T_a + a_3.RH \, Pa^X - [a_4/(1 + a_5 \, I_{cl})].(a_6 - T_{eq}) \qquad (c).$$

EP 0 495 118 A1

**FIG.1A**

ACTIVITY AMOUNT — M

CLOTHING THERMAL RESISTANCE — Icℓ

FACTOR — Tcr

RADIANT TEMPERATURE — Tr

AIR VELOCITY — Vair

AIR TEMPERATURE — Ta

HUMIDITY — RH

INPUT SECTION 2 → CALCULATING SECTION 3 → DISPLAY/OUTPUT SECTION 4

1

**FIG.1B**

ACTIVITY AMOUNT — M

CLOTHING THERMAL RESISTANCE — Icℓ

FACTOR — Tcr

ENVIRONMENT MEASURING UNIT 5 — H

AIR TEMPERATURE — Ta

HUMIDITY — RH

INPUT SECTION 2 → CALCULATING SECTION 3' → DISPLAY/OUTPUT SECTION 4

1'

1. Technical Field

The present invention relates to a method and apparatus for calculating a PMV (Predicted Mean Vote) value as predicted mean thermal sensitivity representing the degree of comfort in an indoor environment.

2. Background Art

In a conventional apparatus, as a formula for calculating a PMV value as predicted mean thermal sensitivity, the PMV equation defined by ISO (International Standard Organization) 7730, i.e., the following equation (1), has been employed:

$$PMV = (0.303e^{-0.036M} + 0.028) \times [(M - W') - 3.05 \times 10^{-3} \cdot \{5733 - 6.99(M - W') - Pa\} - 0.42\{(M - W') - 58.15\} - 1.7 \times 10^{-5} \cdot M \cdot (5867 - Pa) - 0.0014 \cdot M \cdot (34 - Ta) - 3.96 \cdot 10^{-8} \cdot fc\ell \cdot \{(Tc\ell + 274)^4 - (Tr + 273)^4\} - fc\ell \cdot hc \cdot (Tc\ell - Ta)] \quad (1)$$

for

$$Tc\ell = Tsk - 0.155 \cdot Ic\ell \cdot [3.96 \times 10^{-8} \cdot fc\ell \cdot \{(Tc\ell + 274)^4 - (Tr + 273)^4\} + fc\ell \cdot hc \cdot (Tc\ell - Ta)]$$

$$hc = \begin{cases} 2.38(Tc\ell - Ta)^{0.25} \\ \quad for\ 2.38(Tc\ell - Ta)^{0.25} > 12.1\sqrt{Vair} \\ 12.1\sqrt{Vair} \\ \quad for\ 2.38(Tc\ell - Ta)^{0.25} \le 12.1 Vair \end{cases}$$

Tcℓ = clothing surface temperature
Tsk = skin temperature
Pa = RH·Pa*
RH = humidity
Pa* = saturated water vapor pressure
M = activity amount
W' = work amount
Ta = air temperature
Tr = radiant temperature
Icℓ = clothing thermal resistance
Vair = air velocity
fcℓ = factor

3. Disclosure of Invention

[Problems to be Solved by the Invention]

Such a conventional PMV equation, however, is a collection of large number of terms, and has a very complicated formation, e.g., biquadractic terms of $Tc\ell$ and Tr and repetitive calculations of $Tc\ell$.

For this reason, in the conventional method, complicated arithmetic processing is required, and hence the processing time is undesirably prolonged. Moreover, the cost of the PMV calculating apparatus is inevitably increased, thus posing some practical difficulties in the use of such a PMV calculating apparatus as a PMV sensor for building air-conditioning.

[Means for Solving the Problems]

The present invention has been proposed to solve such problems. In the first invention (according to claim 1) and the second invention (according to claim 2), an equivalent temperature Teq is calculated on the basis of a radiant temperature Tr, an air temperature Ta, an air velocity Vair, a predetermined factor Tcr,

coefficients $b_1$ to $b_3$, and a coefficient $n$, according to the following equation (a), and predicted mean thermal sensitivity PMV (to be referred to as PMV* so as to destinguish it from the conventional PMV) is calculated on the basis of the equivalent temperature Teq, the air temperature Ta, a relative humidity RH, a saturated water vapor pressure Pa*, a clothing thermal resistance Icℓ, a skin temperature Tsk, an activity amount M, and arbitrary factors $D_1$ to $D_8$, according to the following equation (b),

$$Teq = b_1 \cdot Tr + b_2 \cdot Ta - b_3 \cdot Vair^n \cdot (Tcr - Ta) \qquad (a)$$

$$PMV^* = (0.303e^{-0.036\ M\ 58.15} + 0.028) \cdot \{D_1 + D_2 \cdot M - D_3 \cdot Tsk + D_4 \cdot M \cdot Ta + (D_5 + D_6 \cdot M) \cdot RH \cdot Pa^* - [D_7/(1 + D_8 \cdot Ic\ell)] \cdot (Tsk - Teq)\} \qquad (b)$$

In the third invention (according to claim 3) and the fourth invention (according to claim 4), an equivalent temperature Teq is calculated on the basis of a radiant temperature Tr, an air temperature Ta, an air velocity Vair, a predetermined factor Tcr, coefficients $b_1$ to $b_3$, and a coefficient $n$, according to the following equation (e), and predicted mean thermal sensitivity PMV* is calculated on the basis of the equivalent temperature Teq, the air temperature Ta, a relative humidity RH, a saturated water vapor pressure Pa*, a clothing thermal resistance Icℓ, and coefficients $a_1$ to $a_6$, according to the following equation (f),

$$Teq = b_1 \cdot Tr + b_2 \cdot Ta - b_3 \cdot Vair^n \cdot (Tcr - Ta) \qquad (e)$$

$$PMV^* = a_1 + a_2 \cdot Ta + a_3 \cdot RH \cdot Pa^* - [a_4/(1 + a_5 \cdot Ic\ell)] \cdot (a_6 - Teq) \qquad (f)$$

In the fifth invention (according to claim 5) and the sixth invention (according to claim 6), in addition to the first and second inventions, an environment measuring unit is arranged to obtain a measurement value H ($W/m^2$), and the equivalent temperature Teq is calculated according to the following equation (i) having a coefficient $b_4$,

$$Teq = b_1 \cdot Tcr + b_2 \cdot Ta - b_4 \cdot H \qquad (i)$$

In the seventh invention (according to claim 7) and the eighth invention (according to claim 8), in addition to the third and fourth inventions, an environment measuring unit is arranged to obtain a measurement value H ($W/m^2$), and the equivalent temperature Teq is calculated according to the following equation (k) having a coefficient $b_4$,

$$Teq = b_1 \cdot Tcr + b_2 \cdot Ta - b_4 \cdot H \qquad (k)$$

[Effect]

According to the first to fourth inventions of the present application, therefore, the predicted mean thermal sensitivity PMV* can be calculated by four simple arithmetic operations without degrading the accuracy, thus greatly shortening the processing time as compared with the conventional apparatus. In addition, since only four simple arithmetic operations are required, a calculating section can be constituted by simply incorporating an analog circuit mainly consisting of an operational amplifier or only one microcomputer. This promotes a reduction in cost of the apparatus and hence greatly contributes to a practical application of the apparatus as a PMV sensor for building air-conditioning.

In addition, according to the fifth to eighth inventions of the present application, since the radiant temperature Tr, the air velocity Vair, and the like need not be independently measured, arithmetic processing for the equivalent temperature Teq is simplified, and the hardware arrangement of the equivalent temperature calculating means is simplified. In addition, the processing time is shortened, resulting in a further reduction in cost.

4. Brief Description of Drawings

Fig. 1(a) is a block diagram showing the arrangement of a predicted mean thermal sensitivity calculating apparatus according to an embodiment of the present invention (third and fourth inventions);
Fig. 1(b) is a block diagram showing the arrangement of a predicted mean thermal sensitivity calculating apparatus according to another embodiment of the present invention (seventh and eighth inventions);

Fig. 2 is a view showing an environment measuring unit used for the predicted mean thermal sensitivity calculating apparatus;

Fig. 3 is a sectional view showing the internal arrangement of a module main body in the environment measuring unit;

Fig. 4 is a view showing the process of calculating predicted mean thermal sensitivity PMV* in the predicted mean thermal sensitivity calculating apparatus shown in Fig. 1(a); and

Fig. 5 is a sectional view showing another environment measuring unit.

Best Mode of Carrying Out the Invention

A predicted mean thermal sensitivity calculating apparatus according to the present invention will be described in detail below.

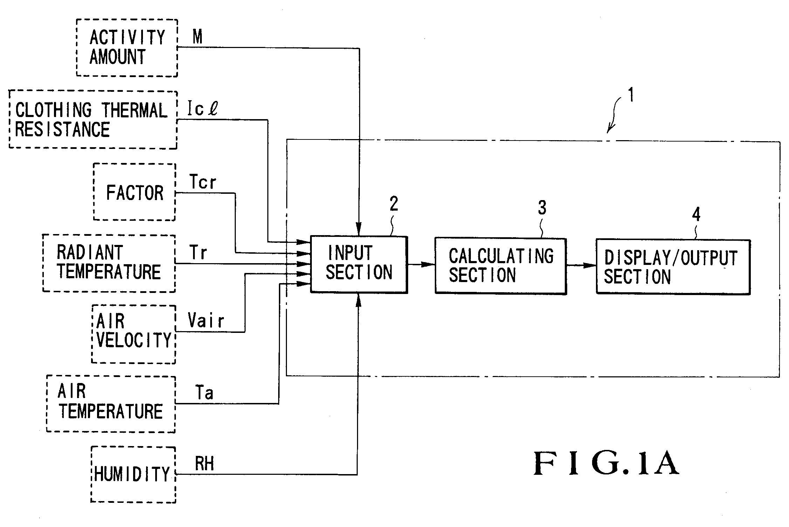

Fig. 1(a) is a block diagram showing an embodiment of this predicted mean thermal sensitivity calculating apparatus, which corresponds to the third and fourth inventions.

A predicted mean thermal sensitivity calculating apparatus 1 comprises an input section 2, a calculating section 3, and a display/output section 4. An activity amount M, a clothing thermal resistance $Ic\ell$, and a predetermined factor Tcr are supplied, as set values, to the input section 2. In addition, a radiant temperature Tr, an air velocity Vair, an air temperature Ta, and a relative humidity RH are supplied, as detection values, to the input section 2. These set and detection values are supplied from the input section 2 to the calculating section 3. Subsequently, the calculating section 3 performs arithmetic processing as a characteristic feature of the present invention on the basis of a PMV* equation using an equivalent temperature Teq.

More specifically, the equivalent temperature is calculated first by the following equation (2) on the basis of the radiant temperature Tr, the air temperature Ta, the air velocity Vair, the predetermined factor Tcr, coefficients $b_1$ to $b_3$, and a coefficient n. Predicted mean thermal sensitivity PMV* is calculated by the following equation (3) on the basis of the calculated equivalent temperature Teq, the air temperature Ta, a relative humidity RH, a saturated water vapor pressure Pa*, the clothing thermal resistance $Ic\ell$, and coefficients $a_1$ to $a_6$.

$$Teq = b_1 \cdot Tr + b_2 \cdot Ta - b_3 \cdot Vair^n \cdot (Tcr - Ta) \qquad (2)$$

$$PMV^* = a_1 + a_2 \cdot Ta + a_3 \cdot RH \cdot Pa^* - [a_4/(1 + a_5 \cdot Ic\ell)] \cdot (a_6 - Teq) \qquad (3)$$

Equation (3) including equation (2) is obtained by the present applicant by trial and error to simplify the conventional PMV equation (equation (1)).

More specifically, the following equation (4) is obtained first (first and second inventions) as a PMV* equation expressed by the equivalent temperature Teq, the air temperature Ta, the relative humidity RH, the saturated water vapor pressure Pa*, the clothing thermal resistance $Ic\ell$, a skin temperature Tsk, the activity amount M, and arbitrary factors $D_1$ to $D_8$.

$$PMV^* = (0.303e^{-0.036\ M\ 58.15} + 0.028) \cdot \{D_1 + D_2 \cdot M - D_3 \cdot Tsk + D_4 \cdot M \cdot Ta + (D_5 + D_6 \cdot M) \cdot RH \cdot Pa^* - [D_7/(1 + D_8 \cdot Ic\ell)] \cdot (Tsk - Teq)\} \qquad (4)$$

Subsequently, the above-mentioned equation (3) is obtained by setting $a_1 = D_1 + D_2 \cdot M - D_3 \cdot Tsk$, $a_2 = D_4 \cdot M$, $a_3 = D_5 + D_6 \cdot M$, $a_4 = D_7$, $a_5 = D_8$, and $a_6 = Tsk$ in equation (4).

The PMV* value obtained by equation (3) coincides with the PMV value obtained by the conventional PMV equation with considerably high accuracy. Table 1 shows the comparison between PMV and PMV* in the presence of air in a summertime under the following conditions: $Ic\ell = 0.5$, RH = 50%, Ta = Tr = 30°C, and Vair = 0.2 m/s. Table 2 shows the comparison between PMV and PMV* in the presence of air in a summertime under the following conditions: $Ic\ell = 0.5$, RH = 50%, Ta = Tr = 30°C, and Vair = 0.4 m/s. It is apparent from these tables that PMV and PMV* coincide with each other with only a small error.

Table 1

| Data associated with PMV | | Data associated with PMV* | |
|---|---|---|---|
| PMV | 1.4977 | PMV* | 1.4767 |
| LOAD | 28.3663 | LOAD* | 28.3992 |
| R + C | 22.0470 | R* + C* | 22.6971 |

Table 2

| Data associated with PMV | | Data associated with PMV* | |
|---|---|---|---|
| PMV | 1.3671 | PMV* | 1.2551 |
| LOAD | 25.8998 | LOAD* | 24.1467 |
| R + C | 24.5231 | R* + C* | 26.9492 |

In Tables 1 and 2, "LOAD" indicates a collective portion in equation (1) expressed as PMV = $(0.303e^{-0.036M} + 0.028)$ x LOAD, and "LOAD*" corresponds to "LOAD" for PMV*. In addition, in R + C = $3.96 \cdot 10^{-8} \cdot fc\ell \cdot \{(Tc\ell + 274)^4 - (Tr + 273)^4\} - fc\ell \cdot hc \cdot (Tc\ell - Ta)$, "R* + C*" corresponds to "R + C" for PMV*. "R* + C*" is proportional to $[a_4/(1 + a_5 \cdot Ic\ell)] \cdot (a_6 - Teq)$.

The PMV* value obtained by the calculating section 3 is supplied to the display/output section 4 to be displayed.

As described above, according to the predicted mean thermal sensitivity calculating apparatus 1 of this embodiment, the predicted mean thermal sensitivity PMV* can be calculated by four simple arithmetic operations without degrading the accuracy, thus greatly shortening the processing time as compared with the conventional apparatus. In addition, since only four simple arithmetic operations are required, the calculating section 3 can be constituted by simply incorporating an analog circuit mainly consisting of an operational amplifier or only one microcomputer. This promotes a reduction in cost of the apparatus and hence greatly contributes to a practical application of the apparatus as a PMV sensor for building air-conditioning.

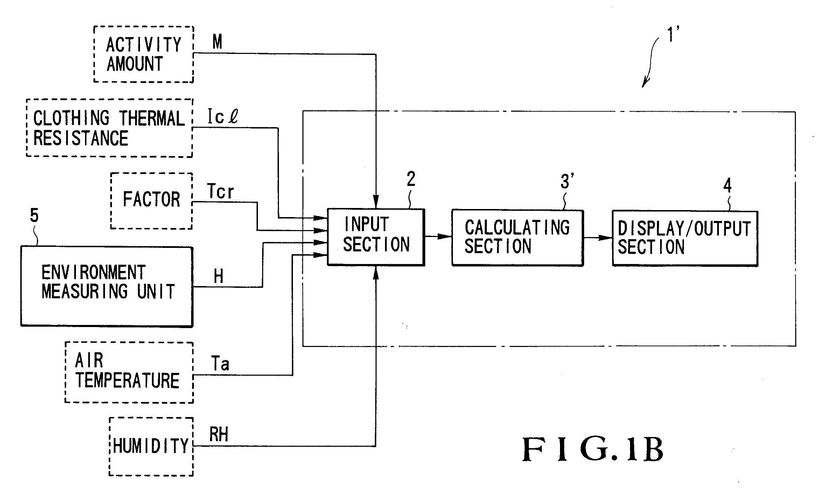

Fig. 1(b) shows another embodiment of the present invention, which corresponds to the seventh and eighth inventions. In this embodiment, similar to the embodiment shown in Fig. 1, an activity amount M, a clothing thermal resistance Ic$\ell$, a predetermined factor Tcr, an air temperature Ta, and a relative humidity RH are supplied to an input section 2. However, an environment measuring unit 5 is arranged indoors to provide a measurement value H (W/m$^2$) in place of a radiant temperature Tr and an air velocity Vair.

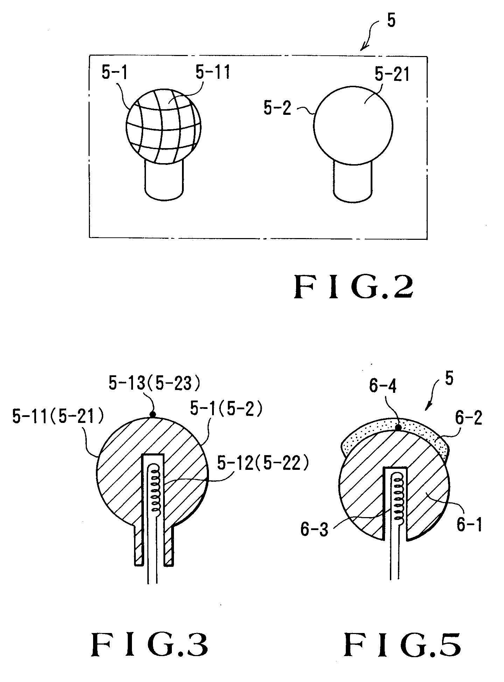

Fig. 2 shows an example of the environment measuring unit 5, which is constituted by a first sensor module 5-1 having a spherical module main body 5-11, and a second sensor module 5-2 having a spherical module main body 5-21. The module main bodies 5-11 and 5-21 consist of a metal having high thermal conductivity (copper or aluminum). The module main body 5-11 has a black or gray dull outer surface, whereas the module main body 5-21 has a mirror surface (plated with silver or chromium) as an outer surface. That is, the emissivity of the outer surface of the module main body 5-11 is set to be larger than that of the module main body 5-21. For example, the module main body 5-11 has an emissivity of 0.3 or more; and the module main body 5-11, an emissivity of 0.2 or less. As shown in Fig. 3, the sensor modules 5-1 and 5-2 respectively have heaters 5-12 and 5-22 arranged in the module main bodies 5-11 and 5-21, and temperature-sensitive elements 5-13 and 5-23 arranged on the outer surfaces thereof. In addition, the sensor modules 5-1 and 5-2 respectively include control circuits (not shown) for controlling the amounts of power to be supplied to the heaters 5-12 and 5-22 so as to keep the detection temperatures of the temperature-sensitive elements 5-13 and 5-23, i.e., the outer surface temperatures of the module main bodies 5-11 and 5-21 at a constant temperature Tcr°C. Furthermore, the sensor modules 5-1 and 5-2 respectively have detecting circuits (not shown) for detecting the power consumption values of the heaters 5-12 and 5-22. Power consumption values $W_1$ and $W_2$ detected by these detecting circuits are respectively divided by surface areas a (m$^2$), of the module main bodies 5-11 and 5-12, against which air currents strike, to obtain power consumption values H1 and H2 (W/m$^2$) per unit area against which an air current strikes, and a calculation of H1 - $\alpha \cdot$ H2 (where $\alpha$ is a factor) is performed. The calculation result is then supplied, as a measurement value H (W/m$^2$), to the input section 2. Note that in this embodiment, thermal interference between the module main bodies 5-11 and 5-21 is minimized.

In a predicted mean thermal sensitivity calculating apparatus 1', to which the measurement value H obtained by the environment measuring unit 5 is input, a calculating section 3' calculates an equivalent temperature Teq on the basis of the air temperature Ta, the predetermined factor (constant temperature) Tcr, coefficients $b_1$, $b_2$, and $b_4$, and the measurement value H, i.e., (H1 - $\alpha$ $\cdot$ H2), according to the following equation (5):

$$Teq = b_1 \cdot Tcr + b_2 \cdot Ta - b_4 \cdot (H1 - \alpha \cdot H2) \qquad (5)$$

Subsequently, predicted mean thermal sensitivity PMV* is calculated on the basis of the equivalent temperature Teq obtained in this manner, the air temperature Ta, the relative humidity RH, a saturated water vapor pressure Pa*, the thermal clothing resistance Icℓ, and coefficients $a_1$ to $a_6$, according to equation (3).

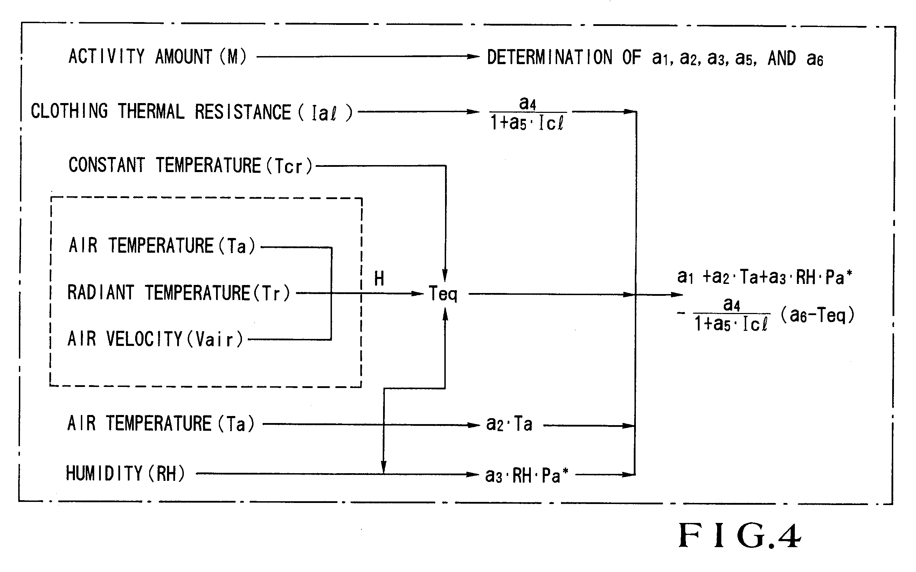

Fig. 4 shows the process of calculating the predicted mean thermal sensitivity PMV* in the predicted mean thermal sensitivity calculating apparatus 1'.

According to this embodiment, owing to the environment measuring unit 5, the air velocity Vair, the radiant temperature Tr, and the like need not be independently measured. That is, since the air velocity Vair, the radiant temperature Tr, and the air temperature Ta are collectively measured as the measurement value H by the environment measuring unit 5, arithmetic processing for the equivalent temperature Teq is simplified, and the hardware arrangement of the calculating section 3' is simplified. In addition, the processing time is shortened, resulting in a further reduction in cost.

Note that the predicted mean thermal sensitivity PMV* may be calculated by equation (4), using the equivalent temperature Teq obtained by equation (5), on the basis of the air temperature Ta, the relative humidity RH, the saturated water vapor pressure Pa*, the clothing thermal resistance Icℓ, a skin temperature Tsk, the activity amount M, and arbitrary factors $D_1$ to $D_8$ (fifth and sixth inventions).

According to the above description, the environment measuring unit 5 is constituted by the two separate components, i.e., the sensor modules 5-1 and 5-2. However, the unit 5 may be constituted by one sensor module. For example, as shown in Fig. 5, a spherical module main body 6-1 is composed of a metal material having high thermal conductivity (copper or aluminum). The emissivity of the outer surface of the module main body 6-1 is set to be 0.3 or more (by forming a black or gray dull outer surface), and a light-transmitting member (e.g., polyethylene) for transmitting light having a non-zero finite wavelength of 0.7 $\mu$m or more is mounted on part of the outer surface of the module main body 6-1 to block an air current. A heater 6-3 is arranged in the module main body 6-1. In addition, a temperature-sensitive element 6-4 is arranged on the outer surface of the module main body 6-1. A control circuit (not shown) for controlling the amount of power to be supplied to the heater 6-3 is arranged to detect a power consumption value $W_3$ of the heater 6-3 so as to keep the detection temperature (outer surface temperature) of the temperature-sensitive element 6-4 at the constant temperature Tcr $^{\circ}$C. This power consumption value $W_3$ is multiplied by [SA/(SA + SB)] $\cdot$ (1/a), and H3 = [SA/(SA + SB)] $\cdot$ ($W_3$/a) is calculated. The calculation result is then supplied, as the measurement value H (W/m$^2$) of the environment measuring unit 5, to the input section 2. Note that in the above description, reference symbol a denotes a surface area (m$^2$), of the module main body 6-1, against which an air current strikes; and SA and SB, the ratio (SA : SB) of a surface area, of the module main body 6-1, against which an air current strikes, to a surface area thereof against which no air current strikes.

In this case, in the predicted mean thermal sensitivity calculating apparatus 1', the equivalent temperature Teq is calculated by the calculating section 3' on the basis of the air temperature Ta, the constant temperature Tcr, the coefficients $b_1$, $b_2$, and $b_4$, and the measurement value H, i.e., H3, according to the following equation (6):

$$Teq = b_1 \cdot Tcr + b_2 \cdot Ta - b_4 \cdot H3 \qquad (6)$$

Subsequently, the predicted mean thermal sensitivity PMV* is calculated on the basis of the equivalent temperature Teq obtained in this manner, the air temperature Ta, the relative humidity RH, the saturated water vapor pressure Pa*, the clothing thermal resistance Icℓ, and the coefficients $a_1$ to $a_6$, according to equation (3).

The relationship between the measurement value H of the environment measuring unit 5 and equation (2), i.e., Teq = $b_1 \cdot Tr + b_2 \cdot Ta - b_3 \cdot Vair^n \cdot (Tcr - Ta)$, will be described next.

In the environment measuring unit 5 shown in Fig. 2, the measurement value H is represented by (H1 -

7

$\alpha \cdot H2$). In the environment measuring unit 5 shown in Fig. 5, the measurement value H is represented by H3. In the environment measuring unit 5, although the surface temperature of the module main body is kept at the constant temperature Tcr by controlling the power consumption value of the heater, this thermal energy is dissipated by environmental conditions, i.e., radiation, an air temperature, and an air current. In this case, heat dissipation by radiation is expressed by $hr \cdot (Tcr - Tr)$ where hr is a radiant temperature transfer coefficient; and heat dissipation by the air temperature Ta and the air velocity Vair, by $m \cdot Vair^n \cdot (Tcr - Ta)$. Therefore, the following equation can be established:

$$H = hr \cdot (Tcr - Tr) + m \cdot Vair^n \cdot (Tcr - Ta)(W/m^2)$$

This equation can be rewritten as:

$$hr \cdot Tcr - H = hr \cdot Tr - m \cdot Vair^n \cdot (Tcr - Ta)$$

Hence, the information of the right-hand side can be obtained by the measurement value H and a given factor $hr \cdot Tcr$. In this case, if the values of the coefficients of the respective terms of the two sides are determined by adding temperature sensor information to the measurement value H, the following equation can be obtained:

$$b_1 \cdot Tcr + b_2 \cdot Ta - b_4 \cdot H = b_1 \cdot Tr + b_2 \cdot Ta - b_3 \cdot Vair^n \cdot (Tcr - Ta)$$

That is, an equivalent temperature is obtained by using a given factor $b_1 \cdot Tcr$, the air temperature Ta, the measurement value H, and the coefficient $b_4$, according to the following equation:

$$Teq = b_1 \cdot Tcr + b_2 \cdot Ta - b_4 \cdot H$$

**Claims**

1. A method of calculating predicted mean thermal sensitivity, comprising the steps of calculating an equivalent temperature Teq on the basis of a radiant temperature Tr, an air temperature Ta, an air velocity Vair, a predetermined factor Tcr, coefficients $b_1$ to $b_3$, and a coefficient n, according to the following equation (a), and calculating predicted mean thermal sensitivity $\overline{PMV^*}$ on the basis of the equivalent temperature Teq, the air temperature Ta, a relative humidity RH, a saturated water vapor pressure $Pa^*$, a clothing thermal resistance Icℓ, a skin temperature Tsk, an activity amount M, and arbitrary factors $D_1$ to $D_8$, according to the following equation (b),

$$Teq = b_1 \cdot Tr + b_2 \cdot Ta - b_3 \cdot Vair^n \cdot (Tcr - Ta) \qquad (a)$$

$$PMV^* = (0.303e^{-0.036 M 58.15} + 0.028) \cdot \{D_1 + D_2 \cdot M - D_3 \cdot Tsk + D_4 \cdot M \cdot Ta + (D_5 + D_6 \cdot M) \cdot RH \cdot Pa^* - [D_7/(1 + D_8 \cdot Icℓ)] \cdot (Tsk - Teq)\} \qquad (b)$$

2. An apparatus for calculating predicted mean thermal sensitivity, characterized by comprising equivalent temperature calculating means for calculating an equivalent temperature Teq on the basis of a radiant temperature Tr, an air temperature Ta, an air velocity Vair, a predetermined factor Tcr, coefficients $b_1$ to $b_3$, and a coefficient n, according to the following equation (c), and predicted mean thermal sensitivity calculating means for calculating predicted mean thermal sensitivity $\overline{PMV^*}$ on the basis of the equivalent temperature Teq, the air temperature Ta, a relative humidity RH, a saturated water vapor pressure $Pa^*$, a clothing thermal resistance Icℓ, a skin temperature Tsk, an activity amount M, and arbitrary factors $D_1$ to $D_8$, according to the following equation (d),

$$Teq = b_1 \cdot Tr + b_2 \cdot Ta - b_3 \cdot Vair^n \cdot (Tcr - Ta) \qquad (c)$$

$$PMV^* = (0.303e^{-0.036 M 58.15} + 0.028) \cdot \{D_1 + D_2 \cdot M - D_3 \cdot Tsk + D_4 \cdot M \cdot Ta + (D_5 + D_6 \cdot M) \cdot RH \cdot Pa^* - [D_7/(1 + D_8 \cdot Icℓ)] \cdot (Tsk - Teq)\} \qquad (d)$$

3. A method of calculating predicted mean thermal sensitivity, comprising the steps of calculating an equivalent temperature Teq on the basis of a radiant temperature Tr, an air temperature Ta, an air velocity Vair, a predetermined factor Tcr, coefficients $b_1$ to $b_3$, and a coefficient $\overline{n}$, according to the following equation (e), and calculating predicted mean thermal sensitivity PMV* on the basis of the equivalent temperature Teq, the air temperature Ta, a relative humidity RH, a saturated water vapor pressure Pa*, a clothing thermal resistance Icℓ, and coefficients $a_1$ to $a_6$, according to the following equation (f),

$$Teq = b_1 \cdot Tr + b_2 \cdot Ta - b_3 \cdot Vair^n \cdot (Tcr - Ta) \qquad (e)$$

$$PMV^* = a_1 + a_2 \cdot Ta + a_3 \cdot RH \cdot Pa^* - [a_4/(1 + a_5 \cdot Icℓ)] \cdot (a_6 - Teq) \qquad (f)$$

4. All apparatus for calculating predicted mean thermal sensitivity, characterized by comprising equivalent temperature calculating means for calculating an equivalent temperature Teq on the basis of a radiant temperature Tr, an air temperature Ta, an air velocity Vair, a predetermined factor Tcr, coefficients $b_1$ to $b_3$, and a coefficient n, according to the following equation (g), and predicted mean thermal sensitivity calculating means for calculating predicted mean thermal sensitivity PMV* on the basis of the equivalent temperature Teq, the air temperature Ta, a relative humidity RH, a saturated water vapor pressure Pa*, a clothing thermal resistance Icℓ, and coefficients $a_1$ to $a_6$, according to the following equation (h),

$$Teq = b_1 \cdot Tr + b_2 \cdot Ta - b_3 \cdot Vair^n \cdot (Tcr - Ta) \qquad (g)$$

$$PMV^* = a_1 + a_2 \cdot Ta + a_3 \cdot RH \cdot Pa^* - [a_4/(1 + a_5 \cdot Icℓ)] \cdot (a_6 - Teq) \qquad (h)$$

5. A method of calculating predicted mean thermal sensitivity according to claim 1, characterized in that an environment measuring unit is arranged to obtain a measurement value H ($W/m^2$), and the equivalent temperature Teq is calculated according to the following equation (i) having a coefficient $b_4$,

$$Teq = b_1 \cdot Tcr + b_2 \cdot Ta - b_4 \cdot H \qquad (i)$$

6. All apparatus for calculating predicted mean thermal sensitivity according to claim 2, characterized in that an environment measuring unit is arranged to obtain a measurement value H ($W/m^2$), and the equivalent temperature Teq is calculated according to the following equation (j) having a coefficient $b_4$,

$$Teq = b_1 \cdot Tcr + b_2 \cdot Ta - b_4 \cdot H \qquad (j)$$

7. A method of calculating predicted mean thermal sensitivity according to claim 3, characterized in that an environment measuring unit is arranged to obtain a measurement value H ($W/m^2$), and the equivalent temperature Teq is calculated according to the following equation (k) having a coefficient $b_4$,

$$Teq = b_1 \cdot Tcr + b_2 \cdot Ta - b_4 \cdot H \qquad (k)$$

8. All apparatus for calculating predicted mean thermal sensitivity according to claim 4, characterized in that an environment measuring unit is arranged to obtain a measurement value H ($W/m^2$), and the equivalent temperature Teq is calculated according to the following equation (ℓ) having a coefficient $b_4$,

$$Teq = b_1 \cdot Tcr + b_2 \cdot Ta - b_4 \cdot H \qquad (ℓ)$$

ACTIVITY AMOUNT — M

CLOTHING THERMAL RESISTANCE — Icℓ

FACTOR — Tcr

RADIANT TEMPERATURE — Tr

AIR VELOCITY — Vair

AIR TEMPERATURE — Ta

HUMIDITY — RH

1

2 INPUT SECTION

3 CALCULATING SECTION

4 DISPLAY/OUTPUT SECTION

FIG.1A

FIG.1B

EP 0 495 118 A1

F I G.2

F I G.3

F I G.5

ACTIVITY AMOUNT (M) ──────┐

CLOTHING THERMAL RESISTANCE (Icl) ──────┐

DETERMINATION OF $a_1$, $a_2$, $a_3$, $a_5$, AND $a_6$

CONSTANT TEMPERATURE (Tcr)

AIR TEMPERATURE (Ta)

RADIANT TEMPERATURE (Tr)

AIR VELOCITY (Vair)

AIR TEMPERATURE (Ta)

HUMIDITY (RH)

H

Teq

$\dfrac{a_4}{1+a_5 \cdot Icl}$

$a_2 \cdot Ta$

$a_3 \cdot RH \cdot Pa^*$

$a_1 + a_2 \cdot Ta + a_3 \cdot RH \cdot Pa^* - \dfrac{a_4}{1+a_5 \cdot Icl}(a_6 - Teq)$

# FIG.4

13

# INTERNATIONAL SEARCH REPORT

International Application No PCT/JP91/01016

## I. CLASSIFICATION OF SUBJECT MATTER (if several classification symbols apply, indicate all) 6

According to International Patent Classification (IPC) or to both National Classification and IPC

Int. Cl$^5$ F24F11/02

## II. FIELDS SEARCHED

### Minimum Documentation Searched 7

| Classification System | Classification Symbols |
|---|---|
| IPC | F24F11/00-11/02 |

### Documentation Searched other than Minimum Documentation to the Extent that such Documents are Included in the Fields Searched 8

| | |
|---|---|
| Jitsuyo Shinan Koho | 1962 - 1991 |
| Kokai Jitsuyo Shinan Koho | 1971 - 1991 |

## III. DOCUMENTS CONSIDERED TO BE RELEVANT 9

| Category* | Citation of Document, 11 with indication, where appropriate, of the relevant passages 12 | Relevant to Claim No. 13 |
|---|---|---|
| A | JP, A, 2-101341 (Yamatake-Honeywell Co., Ltd.), April 13, 1990 (13. 04. 90) | 1-8 |
| A | JP, A, 63-128228 (Daikin Industries, Ltd.), May 31, 1988 (31. 05. 88) | 5-8 |
| A | JP, A, 62-125242 (Daikin Industries, Ltd.), June 6, 1987 (06. 06. 87) | 5-8 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| October 15, 1991 (15. 10. 91) | October 28, 1991 (28. 10. 91) |
| International Searching Authority | Signature of Authorized Officer |
| Japanese Patent Office | |

Form PCT/ISA/210 (second sheet) (January 1985)